Europäisches Patentamt

European Patent Office

Office européen des brevets

(11) Publication number: **0 488 042 A1**

## EUROPEAN PATENT APPLICATION

(21) Application number: **91119812.5**

(22) Date of filing: **21.11.91**

(51) Int. Cl.5: **C04B 18/02, B09B 3/00**

(30) Priority: **29.11.90 IT 2222990**

(43) Date of publication of application:
**03.06.92 Bulletin 92/23**

(84) Designated Contracting States:
**AT BE CH DE DK ES FR GB GR IT LI LU NL SE**

(71) Applicant: **CONTENTO TRADE S.A.S. di CIOFFI ILARIA**
**14, Via Santa Barbara**
**I-33020 Rigolato frazione Valpicetto, Udine(IT)**

(72) Inventor: **Contento, Maria Pia**
**Viale Venezia, 506**
**W-33100 Udine(IT)**
Inventor: **Cioffi, Flavio**
**Viale Venezia, 506**
**W-33100 Udine(IT)**

(74) Representative: **Gervasi, Gemma et al**
**NOTARBARTOLO & GERVASI Srl Viale Bianca Maria 33**
**I-20122 Milan(IT)**

(54) **Granules with a high degree of mechanical resistance made from inorganic industrial waste.**

(57) The present invention refers to granules with a high degree of mechanical resistance obtained by adding a high-fluxing substance to a mixture of mainly inorganic industrial waste materials containing at least one non-toxic hazardous waste, one residue from chemical processing, and possibly a thermo-melting binder, grinding the mixture thus obtained, granulating, drying, thermal treatment at a temperature of between 800° and 1300°C, and cooling. The resulting granules are non-toxic according to the definition given in Italian Presidential Decree 915 of 10th September 1982, and are useful as filler materials in the preparation of special concrete or articles made of cement with particularly high chemical, physical, and mechanical properties.

EP 0 488 042 A1

A.Technical Background

The present invention refers to granules with a high degree of mechanical resistance obtained by transforming inorganic industrial waste, and their uses.

In the present text, the term waste is applied to industrial waste that is mainly inorganic and toxic, hazardous, or special, that is referred to in Decree by the President of the Italian Republic n° 915 dated 10th of September 1982 and its successive modifications, in which there is an organic carbon content of less than 30%.

B.Technical Problem

The serious ecological and economic problems connected with the accumulation of toxic and hazardous waste deriving from various types of activity connected with current industrialized society are well known.

In particular, mainly inorganic industrial waste consisting of blast furnace and foundry slag, ash and cinders deriving from the combustion of coal and mineral oil, smoke purification sludges, metal and rock grinding sludges, galvanization process sludges, residues from ceramic processes, tanning process sludges, arc furnace slag, paint residues, ash from incinerator plants, sludges and slag from mineral processing, sludges deriving from chemical and electrochemical processes, differ from mainly organic waste which can be eliminated by combustion or disposed of using chemical or biological processes, and are practically indestructible because they contain considerable percentages of silico-aluminates, aluminates, silicates, and metal oxides.

For many years, these types of waste have been accumulated in uninhabited areas or directly dumped at sea.

Neither of these solutions is still practicable because the pollution of ground water and the coasts has reached a point where it has become necessary that the authorities ban these types of disposal.

Continual research efforts are being made into finding new ways to recycle these types of waste, and at the same time eliminate the hazards associated with them and safeguard the environment in which we live.

C. Previous Methods

Among the systems being used today to modify the chemical/ physical properties of toxic and hazardous waste to the end of eliminating, or at least reducing the degree of hazard, are incineration or pyrolysis, decyanisation, and chromate reduction.

All these processes are extremely costly, have little effect in reducing toxicity, and in turn contribute towards environmental pollution by emitting toxic fumes and because of the high heavy metal content in the residual ashes produced.

Stabilization/solidification is another known type of treatment, allowing to transform waste into solid masses with homogeneous properties, however this treatment can only be applied to a limited number of toxic substances and does not yield products that are irreversibly insoluble.

Another method for the elimination of mainly inorganic industrial waste consists of mixing these waste products with a binder, Portland cement for instance, and other suitable additives, so as to form manufactured articles from the mixture produced that do not leak toxic substances into the environment even in poor weather conditions.

In his previous Italian Patent Application 22487 A/89, the Applicant described a process for the recovery of inorganic industrial waste that comprised moulding the waste, in the presence of a thermo-melting binder, into articles for the constuction industry and treating these items at a high temperature. The manufactured articles obtained using the above described process do not always have good mechanical properties and require percentages, sometimes considerable, of high cost products (melting aids or additives).

D. Detailed Description of the Invention

The applicant has now found that by adding a high-fluxing substance to a mixture of mainly inorganic waste, both of a toxic and hazardous type and a non-toxic and hazardous type, which may also be mixed with a thermo-melting binder, granules can be obtained that are highly mechanically resistant.

In the present text the term high-fluxing substance signifies silicium nitride, silicium carbide, aluminium nitride, aluminium carbide, zirconium oxide, metallic borates, boron oxides and borosilicates, particularly Pyrex glass.

The term thermo-melting binder signifies clays, and in particular illite, montmorillonite and bentonite,

2

EP 0 488 042 A1

silica, aluminates and silico-aluminates, and in particular mica.

The terms toxic and hazardous, and non-toxic and hazardous used in the present text have the same meaning as that given to them in Decree by the President of the Italian Republic n° 915 dated 10th of September 1982.

Among the toxic and hazardous waste materials suitable for forming the granules that are the subject of the present invention, are foundry smoke purification sludges, blast furnace and foundry slag, galvanization process sludges, and sludges from ceramic processes. Some examples of non-toxic and hazardous waste are ashes deriving from thermo-destruction of coal, sludges from granite working, foundry moulding sand, glass working residues, and chemical process residues such as effluents from caprolactam processing, sulphur dioxide purification sludges, effluents from the paper industry, and effluents from distilleries and sugar works.

According to a fundamental requisite of the present invention, the granules with a high degree of mechanical resistance consist of a mixture of mainly inorganic industrial waste and at least one high-fluxing substance, and their granulometry is between 0.1 and 90 mm, preferably between 0.1 and 25 mm, their abrasion mass loss is less than 30% as measured according to standard UNI 8520/19, their resistance to compression measured according to standard UNI 8520/17 is between 100 to 1000 N/sq.mm., and they are non-toxic according to the definition in Italian Presidential Decree 915 dated 10th September 1982.

According to a fundamental requisite of the present invention, the granules with a high degree of mechanical resistance are obtained by adding from 0.1 to 20 parts by weight of a high-fluxing substance to a mixture of inorganic industrial waste containing from 20 to 70 parts by weight of at least one toxic and hazardous type waste, from 20 to 70 parts by weight of at least one non-toxic and hazardous type waste, from 1 to 5 parts by weight of a residue from chemical processing, and optionally a thermo-melting binder, in such a way that the weight ratio between the total silico-aluminates, silicates, and aluminates, and the total metal oxides in the mixture is between 1:1 and 4:1.

The granules according to the present invention have a high degree of mechanical resistance, in particular compression strength, and a high degree of surface hardness, which makes them extremely useful as a filler material for the preparation of special concrete or manufactured articles that are made of cement with exceptional chemical, physical, and mechanical properties.

Typically, the granules according to the invention show an abrasion weight loss measured according to standard UNI 8520/19 of less than 30%, and generally of between 10% and 20%.

Particular care should be paid to the choice and quantities of components in a mixture, so that the waste materials used do not contain components with melting temperature differences in excess of 600°C in quantities of more than 10% by weight of the total dry mixture. This is to avoid the uncontrolled expansion of the granules during heat treatment, which has a negative effect on the mechanical resistance of the final product.

According to a fundamental requisite of the present invention, the granules are prepared via a process that includes the following essential stages:

a) mixing from 0.1 to 20 parts by weight of a high-fluxing substance with a mixture of inorganic industrial waste containing from 20 to 70 parts by weight of at least one toxic and hazardous type waste, from 20 to 70 parts by weight of at least one non-toxic and hazardous type waste, from 1 to 5 parts by weight of a residue from chemical processing, and possibly a thermo-melting binder, in such a way that the weight ratio between the total silico-aluminates, silicates, and aluminates, and the total metal oxides in the mixture is between 1:1 and 4:1;

b) grinding the resultant mixture until the mixture has an average granulometry of between 100 and 200 micrometres;

c) adding water to the ground mixture in a quantity of between 5% and 50% by weight of the total dry mixture;

d) granulating the paste obtained from stage (c) into granules from 0.1 to 90 mm.;

e) drying these granules by heating and ventilating until the dried granules have a humidity content of 5% by weight, using a temperature of between 50°C and 400°C;

f) The thermal treatment of the dried granules at a temperature of between 800°C and 1300°C for a time of between 5 minutes and 6 hours;

g) cooling the granules obtained from stage (f) to ambient temperature.

According to a preferred embodiment of the present invention, the drying stage takes place at a temperature of between 70°C and 250°C. The drying time is typically between 0.5 hours and 24 hours.

According to another preferred embodiment, the granulating and drying stages are carried out in a single operation, using, for example, a high internal turbulence dryer.

The heat treatment stage is preferably carried out in rotating kilns.

3

According to a preferred embodiment, stage (g) is carried out in two phases. In the first phase the granules are cooled to 300°C in an ammonia saturated environment for a time of between 0.5 and 6 hours, and in the second phase the granules are further cooled from 300°C to 20°C in an air environment for a time of between 1 and 3 hours. This two-phase cooling (tempering treatment) inproves the surface properties of the resulting granules.

In another embodiment of the invention process the granulating stage can be replaced by an extrusion stage of the mixture of waste mixed with water into parallelepipedal or cylindrical briquettes that are up to 10 cm thick.

The drying and heat treatment stages of the resulting granules are evidently longer the larger is the size of the granules themselves.

The following examples are reported to illustrative, but not limitative purposes.

Example 1

The following substances were mixed in a rotating arm mixer:

40 parts by weight ceramic process sludges (mainly inorganic toxic and hazardous industrial waste);

27 parts by weight illite clay (thermo-melting binder);

30 parts by weight foundry smoke damping sludge (mainly inorganic toxic and hazardous industrial waste);

3 parts by weight pyrex glass (high-fluxing substance);

15 parts by weight water.

The ratio between the total quantities by weight of silico-aluminates, silicates, and aluminates, and the total quantity by weight of metal oxides in the mixture was 2:1.

The resulting paste was granulated in a pan granulator, and the granules obtained were dried and heat treated as described below, and the properties also decribed below were obtained:

| | |
|---|---|
| Maximum size of the granules obtained: | = 0.10 mm |
| Drying: | = 4h at 105°C |
| Granules resistance to crushing (before heat treatment): | = 1.5 N/sq.mm. |
| Heat treatment: | = 0.5h at 1,100°C |
| Granules weight loss through abrasion (after heat treatment - UNI 8520/19): | = 11% by weight |
| Leaching test: (Pres. Dec. 915 dated 10th September 1982) | = non-toxic |

Pyrex glass was not added to a mixture that was otherwise identical and treated in the same fashion as that described above.

The resulting granules had the same properties as the granules containing Pyrex glass, with the exception of the weight loss through abrasion, which was greater:

| | |
|---|---|
| Granules weight loss through abrasion (after heat treatment - UNI 8520/19): | = 14% by weight. |

Example 2

The same substances in the same ratios as those shown in Example 1 were mixed in a rotating arm mixer. The resulting paste was granulated in a pan granulator, the granules obtained were dried and heat treated as described in Example 1, and were subjected to a tempering treatment consisting of two-phase cooling, the first phase being in an $NH_3$ vapour saturated environment, and the second phase in an air atmosphere.

The resulting granules had the same properties as the granules containing Pyrex glass obtained in Example 1, with the exception of the abrasion weight loss, which was lower:

The process conditions used for tempering and weight loss through abrasion tests on the granules are shown below:

| Tempering treatment: | NH₃ atmosphere:<br>from 1,100° to 300° in 3h.<br>Air atmosphere:<br>from 300° to 20° in 3h. |
|---|---|
| Granules weight loss through abrasion (after heat treatment - UNI 8520/19): | = 8% by weight |

Example 3

The following substances were mixed in a rotating arm mixer:

17 parts by weight foundry molding sand (mainly inorganic non-toxic and hazardous industrial waste);

33 parts by weight foundry smoke damping sludge (mainly inorganic toxic and hazardous industrial waste);

10 parts by weight galvanization process sludge (mainly inorganic toxic and hazardous industrial waste);

2 parts by weight caprolactam processing effluent (mainly inorganic non-toxic and hazardous industrial waste);

30 parts by weight: chlorite clay (thermo-melting binder);

5 parts by weight: ground glass (thermo-melting binder);

3 parts by weight: pyrex glass (high-fluxing substance);

20 parts by weight: water.

The ratio between the total quantities by weight of silico-aluminates, silicates, and aluminates, and the total quantity by weight of metal oxides in the mixture was 1.8:1.

The resulting paste was granulated in a pan granulator, and the granules obtained were dried and thermally treated as described below, and the properties decribed below were obtained:

| Maximum size of the granules obtained: | = 0.10 mm |
|---|---|
| Drying: | = 4h at 105°C |
| Granules resistance to crushing (before heat treatment): | = 1.6 N/sq.mm. |
| Heat treatment: | = 0.4h at 950°C |
| Granules weight loss through abrasion (after heat treatment - UNI 8520/19): | = 12% by weight |
| Leaching test: (Pres. Dec. 915 dated 10th September 1982) | = non-toxic |

Pyrex glass was not added to a mixture that was otherwise identical and treated in the same fashion as that described above.

The resulting granules had the same properties as the granules containing Pyrex glass, with the exception of the abrasion weight loss, which was greater:

| Granules weight loss through abrasion (after heat treatment - UNI 8520/19): | = 14% by weight |
|---|---|

Example 4

The same substances in the same ratios as those shown in Example 3 were mixed in a rotating arm mixer. The resulting paste was granulated in a pan granulator, the granules obtained were dried and heat treated as described in Example 3, and were subjected to a tempering treatment consisting of two-phase cooling, the first phase being in an NH₃ vapour saturated environment, and the second phase in an air atmosphere.

The resulting granules had the same properties as the granules containing Pyrex glass obtained in Example 3, with the exception of the abrasion weight loss, which was lower:

The process conditions used for tempering and weight loss through abrasion tests on the granules are shown below:

| Tempering treatment: | NH₃ atmosphere: from 950° to 300° in 3h. Air atmosphere: from 300° to 20° in 3h. |
|---|---|
| Granules weight loss through abrasion (after heat treatment -UNI 8520/19): | = 9% by weight. |

### Example 5

The following substances were mixed in a rotating arm mixer:

40 parts by weight ceramic process sludges (mainly inorganic toxic and hazardous industrial waste);

27 parts by weight coal thermo-destruction ashes (mainly inorganic non-toxic and hazardous industrial waste);

27 parts by weight foundry smoke damping sludge (mainly inorganic toxic and hazardous industrial waste);

3 parts by weight sulphur dioxide damping sludge (mainly inorganic non-toxic and hazardous industrial waste);

3 parts by weight pyrex glass (high-fluxing substance);

15 parts by weight water.

The ratio between the total quantities by weight of silico-aluminates, silicates, and aluminates, and the total quantity by weight of metal oxides in the mixture was 2.1:1.

The resulting paste was granulated in a pan granulator, and the granules obtained were dried and heat treated as described below, and the properties decribed below were obtained:

| Maximum size of the granules obtained: | = 0.10 mm |
|---|---|
| Drying: | = 4h at 105°C |
| Granules resistance to crushing (before heat treatment): | = 0.5 N/sq.mm. |
| Heat treatment: | = 0.5h at 1,100°C |
| Granules weight loss through abrasion (after heat treatment - UNI 8520/19): | = 15% by weight |
| Leaching test: (Pres. Dec. 915 dated 10th September 1982) | = non-toxic |

### Example 6

The same substances in the same ratios as those shown in Example 5 were mixed in a rotating arm mixer. The resulting paste was granulated in a pan granulator, the granules obtained were dried and heat treated as described in Example 5, and were subjected to a tempering treatment consisting of two-phase cooling, the first phase being in an NH₃ vapour saturated environment, and the second phase in an air atmosphere.

The resulting granules had the same properties as the granules obtained in Example 5, with the exception of the weight loss through abrasion, which was lower:

The process conditions used for tempering and weight loss through abrasion tests on the granules are shown below:

| Tempering treatment: | NH₃ atmosphere: from 1,100° to 300° in 3h. Air atmosphere: from 300° to 20° in 3h. |
|---|---|
| Granules weight loss through abrasion (after heat treatment - UNI 8520/19): | = 12% by weight. |

### Example 7

The following substances were mixed in a rotating arm mixer:

40 parts by weight granite processing sludge (mainly inorganic non-toxic and hazardous industrial waste);

10 parts by weight foundry molding sand (mainly inorganic non-toxic and hazardous industrial waste);

10 parts by weight foundry smoke damping sludge (mainly inorganic toxic and hazardous industrial waste);

15 parts by weight galvanization process sludge (mainly inorganic toxic and hazardous industrial waste);

15 parts by weight glass processing residues (mainly inorganic non-toxic and hazardous industrial waste);

2 parts by weight caprolactam processing effluent (mainly inorganic non-toxic and hazardous industrial waste);

3 parts by weight pyrex glass (high-fluxing substance);

18 parts by weight water.

The ratio between the total quantities by weight of silico-aluminates, silicates, and aluminates, and the total quantity by weight of metal oxides in the mixture was 1.9:1.

The resulting paste was granulated in a pan granulator, and the granules obtained were dried and thermally treated as described below, and the properties also decribed below were obtained:

| | |
|---|---|
| Maximum size of the granules obtained: | = 0.10 mm |
| Drying: | = 4h at 105°C |
| Granules resistance to crushing (before heat treatment): | = 0.8 N/sq.mm. |
| Heat treatment: | = 0.5h at 1,100°C |
| Granules weight loss through abrasion (after heat treatment - UNI 8520/19): | = 15% by weight |
| Leaching test: (Pres. Dec. 915 dated 10th September 1982) | = non-toxic |

Example 8

The same substances in the same ratios as those shown in Example 7 were mixed in a rotating arm mixer. The resulting paste was granulated in a pan granulator, the granules obtained were dried and heat treated as described in Example 7, and were subjected to a tempering treatment consisting of two-phase cooling, the first phase being in an $NH_3$ vapour saturated environment, and the second phase in an air atmosphere.

The resulting granules had the same properties as the granules obtained in Example 7, with the exception of the weight loss through abrasion, which was lower:

The process conditions used for tempering and weight loss through abrasion tests on the granules are shown below:

| | |
|---|---|
| Tempering treatment: | $NH_3$ atmosphere:<br>from 1,100° to 300° in 3h.<br>Air atmosphere:<br>from 300° to 20° in 3h. |
| Granules weight loss through abrasion (after heat treatment - UNI 8520/19): | = 12% by weight. |

Example 9

The same substances in the same ratios as those shown in Example 1 were mixed in a rotating arm mixer, with the exception that the quantity of water added was 20% by weight of the dry mixture obtained. The resulting paste was extruded and then cut into test cubes with 71 mm. sides. The resulting test specimens were then dried at 105°C for 24h, thermally treated for 3h at 1,100°C, and then cut and ground until two of their faces were perfectly parallel and had a 71 mm. 71 mm. cross section, as required by standard UNI 8520/17, and were then subjected to a compression test according to that standard. The salient properties of the granules thus obtained were:

| | |
|---|---|
| Granules resistance to crushing (UNI 8520/17): | = 330 N/sq.mm. |
| Leaching test (Pres. Dec. 915 dated 10th September 1982): | = non-toxic. |

Pyrex glass was not added to a mixture that was otherwise identical and treated in the same way as that described above. The resulting granules had the same properties as the granules containing Pyrex glass, with the exception of their resistance to crushing, which was inferior:

| | |
|---|---|
| Granules resistance to crushing (UNI 8520/17): | = 250 N/sq.mm. |

## Example 10

The same substances in the same ratios as those shown in Example 3 were mixed in a rotating arm mixer. The resulting paste was extruded and then cut into test cubes with 71 mm. sides. The resulting test specimens were then dried at 105°C for 24h, heat treated for 3h at 950°C, and then cut and ground until two of their faces were perfectly parallel and had a 71 mm. x 71 mm. cross section, as required by standard UNI 8520/17, and were then subjected to a compression test according to that standard. The salient properties of the granules thus obtained were:

| | |
|---|---|
| Granules resistance to crushing (UNI 8520/17): | = 320 N/sq.mm. |
| Leaching test (Pres. Dec. 915 dated 10.9.82): | = non-toxic. |

Pyrex glass was not added to a mixture that was otherwise identical and treated in the same fashion as that described above.

The resulting granules had the same properties as the granules containing Pyrex glass, with the exception of their resistance to crushing, which was inferior:

| | |
|---|---|
| Granules resistance to crushing (UNI 8520/17): | = 250 N/sq.mm. |

## Example 11

The same substances in the same ratios as those shown in Example 5 were mixed in a rotating arm mixer, with the exception that the quantity of water added was 20% by weight of the dry mixture obtained.

The resulting paste was extruded and then cut into test cubes with 71 mm. sides. The resulting test specimens were then dried at 105°C for 24h, heat treated for 3h at 1,100°C, and then cut and ground until two of their faces were perfectly parallel and had a 71 mm. x 71 mm. cross section, as required by standard UNI 8520/17, and were then subjected to a compression test according to that standard. The salient properties of the granules thus obtained were:

| | |
|---|---|
| Granules resistance to crushing (UNI 8520/17): | = 130 N/sq.mm. |
| Leaching test (Pres. Dec. 915 dated 10th September 1982): | = non-toxic. |

## Example 12

The same substances in the same ratios as those shown in Example 7 were mixed in a rotating arm mixer, with the exception that the quantity of water added was 20% by weight of the dry mixture obtained.

The resulting paste was extruded and then cut into test cubes with 71 mm. sides. The resulting test specimens were then dried at 105°C for 24h, heat treated for 3h at 1000°C, and then cut and ground until two of their faces were perfectly parallel and had a 71 mm. x 71 mm. cross section, as required by standard UNI 8520/17, and were then subjected to a compression test according to that standard. The salient properties of the granules thus obtained were:

| | |
|---|---|
| Granules resistance to crushing (UNI 8520/17): | = 200 N/sq.mm. |
| Leaching test (Pres. Dec. 915 dated 10th September 1982): | = non-toxic. |

## Claims

1. Granules with a high degree of mechanical resistance consisting of a mixture of mainly inorganic industrial waste and at least one high-fluxing substance, a granulometry of between 0.1 and 90 mm, a mass loss through abrasion of less than 30% as measured according to standard UNI 8520/19, a compression stregth measured according to standard UNI 8520/17 of between 100 and 1000 N/sq.mm., and which are non-toxic according to the definition in Italian Presidential Decree 915 dated 10th September 1982.

2. The granules with a high degree of mechanical resistance as claimed in claim 1, wherein their granulometry is between 0.1 and 25 mm.

3. The granules with a high degree of mechanical resistance as claimed in claim 1, obtained by adding from 0.1 to 20 parts by weight of a high-fluxing substance to a mixture of inorganic industrial waste containing from 20 to 70 parts by weight of at least one toxic and hazardous type waste, from 20 to 70 parts by weight of at least one non-toxic and hazardous type waste, from 1 to 5 parts by weight of a residue from chemical processing, and optionally a thermo-melting binder, in such a way that the weight ratio between the total silico-aluminates, silicates, and aluminates, and the total metal oxides in the mixture is between 1:1 and 4:1.

4. The granules with a high degree of mechanical resistance as claimed in claim 3, characterized in that the waste materials used do not contain components with melting temperature differences higher than 600°C in quantities of more than 10% by weight of the total dry mixture.

5. Process for preparing highly mechanically resistant granules including the following essential stages:
   a) mixing from 0.1 to 20 parts by weight of a high-fluxing substance to a mixture of inorganic industrial waste containing from 20 to 70 parts by weight of at least 10 one toxic and hazardous type waste, from 20 to 70 parts by weight of at least one non-toxic and hazardous type waste, from 1 to 5 parts by weight of a residue from chemical processing, and possibly a heat-fluxing binder, in such a way that the weight ratio between the total silico-aluminates, silicates, and aluminates, and the total metal oxides in the mixture is between 1:1 and 4:1;
   b) grinding the resultant mixture until the mixture has an average granulometry of between 100 and 200 micrometres;
   c) adding water to the ground mixture in a quantity of between 5% and 50% by weight of the total dry mixture;
   d) granulating the paste obtained from stage (c) into granules from 0.1 to 90 mm.;
   e) drying these granules by heating and ventilating until the dried granules have a humidity content of 5% by weight, using a temperature of between 50°C and 400°C;
   f) thermally treating the dried granules at a temperature of between 800°C and 1300°C for a time of between 5 minutes and 6 hours;
   g) cooling the granules obtained from stage (f) to ambient temperature.

6. The process as claimed in claim 5, wherein the drying stage is carried out at a temperature between 70°C and 250°C.

7. The process as claimed in claim 5, wherein the granulating and drying stages are carried out in a single operation, using a high internal turbulence dryer.

8. The process as claimed in claim 5, wherein the heat treatment stage is preferably carried out in rotating kilns.

9. The process as in claim 5, wherein cooling stage (g) is carried out in two phases, in the first phase the granules are cooled to 300°C in an ammonia saturated environment for a time of between 0.5 and 6 hours, and in the second phase the granules are further cooled from 300°C to 20°C in an air environment for a time of between 1 and 3 hours.

10. The use of granules with a high degree of mechanical resistance as claimed in claim 1, as filler material for the preparation of special concrete or manufactured articles made of cement.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WORLD PATENTS INDEX LATEST Week 9037, Derwent Publications Ltd., London, GB; AN 90-280183 & JP-A-2 198 769 (NIPPON STEEL CHEM. K.K.) 7 August 1990 * abstract * | 1,3-5 | C04B18/02 B09B3/00 |
| A | EP-A-0 313 016 (F.FÖRSTER ET AL.) * page 3, line 36 - page 4, line 17 * * page 4, line 52 - page 5, line 4 * | 1,3-5,10 | |
| A | WO-A-8 910 176 (CERAMIC BONDING INC.)  * page 6, last paragraph * * page 8, paragraph 2 * * page 9, paragraph 2 -paragraph 3; claims 1,5,8,9,13 * | 1,3,5,6, 10 | |
| D,P, A | EP-A-0 433 684 (CONTENTO TRADE S.A.S DI CIOFFI ILARIA) * the whole document * | 1,3,5 | |
| A | DE-A-3 630 697 (MAGINDAG STEIRISCHE MAGNESIT INDUSTRIE AG) * page 2, line 45 - page 3, line 29 * | 1,3,5 | **TECHNICAL FIELDS SEARCHED (Int. Cl.5 )**  C04B |

The present search report has been drawn up for all claims

| Place of search | Date of completion of the search | Examiner |
|---|---|---|
| THE HAGUE | 24 FEBRUARY 1992 | THEODORIDOU E. |

EPO FORM 1503 03.82 (P0401)